# EUROPÄISCHE PATENTSCHRIFT

(11) **EP 0 755 634 B1**
(45) Veröffentlichungstag und Bekanntmachung des Hinweises auf die Patenterteilung: **31.05.2000**
(21) Anmeldenummer: 96109557.7
(22) Anmeldetag: 14.06.1996
(51) Int. Cl.: A23L 2/52, A23L 1/30, A23L 1/305

(54) **Nahrungsergänzungsmittel**
Nutritional supplement
Complément alimentaire

(30) Priorität: 26.07.1995 DE 19527281
(43) Veröffentlichungstag der Anmeldung: 29.01.1997
(73) Patentinhaber: Hans-Günter Berner GmbH, 24161 Altenholz (DE)
(72) Erfinder: Berner, Hans-Günter, 24161 Altenholz (DE)
(74) Vertreter: Tönnies, Jan G. Boehmert & Boehmert, Anwaltssozietät

(56) Entgegenhaltungen:
- EP-A- 0 713 653
- WO-A-88/01861
- WO-A-94/27628
- FR-A- 2 648 679
- DATABASE WPI Section Ch, Week 9321 Derwent Publications Ltd., London, GB; Class B05, AN 93-171793 XP002032906 & JP 05 103 629 A (YANAMOTO Y) , 27.April 1993

## Beschreibung

Die Erfindung betrifft ein Nahrungsergänzungsmittel nach dem Oberbegriff des Hauptanspruches.

Nahrungsergänzungsmittel auf der Basis eines Frucht- oder Gemüsesaftes sind in vielfältiger Weise bekannt. Grundlage dieser Getränke ist die Zugabe von Stoffen, deren positive Wirkung auf den menschlichen Organismus an sich bekannt ist. Es stellt sich dabei jedoch das Problem, daß diese Stoffe von dem Organismus häufig nur unzureichend aufgenommen werden.

Aus der WO-A-94/27628 ist ein Nahrungsergänzungsmittel für Kranken bekannt.

Der Erfindung liegt die Aufgabe zugrunde, ein Nahrungsergänzungsmittel auf der Basis eines Frucht- oder Gemüsesaftes zu schaffen, bei dem eine Aufnahme der Stoffe, mit denen das Getränk angereichert ist, in ausreichendem Maße gewährleistet ist.

Erfindungsgemäß wird diese Aufgabe durch ein Nahrungsergänzungsmittel mit den Merkmalen des Anspruches 1 gelöst.

L-Carnitin ist ein Fettsäure-Carrier, der insbesondere langkettige Fettsäuren in die Mitochondrien einschleust und sie dadurch dem oxidativen Abbau zugänglich macht. Die Kombination von L-Carnitin mit essentiellen Fettsäuren, die durch eine gleichzeitige Aufnahme dieser Stoffe gewährleistet ist, stellt damit sicher, daß die essentiellen Fettsäuren auch tatsächlich im Organismus wirksam werden.

Es ist weiter bekannt, daß es bei körperlicher Aktivität zu einer vermehrten Ausscheidung von L-Carnitin kommt. Es ist daher sinnvoll, einen eventuellen Verlust an L-Carnitin durch eine entsprechende Zufuhr über die Nahrung auszubleichen.

Der Literatur ist weiter zu entnehmen, daß durch eine orale Gabe von L-Carnitin die Sauerstoffaufnahme bei Sportlern gesteigert werden kann. Dies beruht offenbar auf den biochemischen Wirkungen des Carnitins: dieses bindet Fettsäurereste, die normalerweise an Co-Enzym A binden würden, wodurch mehr freies Co-Enzym A für den Zitratzyklus zur Verfügung steht. Co-Enzym A ist jedoch ein wesentlicher Faktor für das Aufrechterhalten für das Zitratzyklus und damit für die aerobe Energiegewinnung. Auf diese Weise wird auch die Lactatbildung zurückgedrängt. Weiter wurde gezeigt, daß die Aufnahme von L-Carnitin bei Sportlern eine Senkung der Herzfrequenz bewirkt wird.

Es ist weiter bekannt, daß die orale Gabe von ungesättigten Fettsäuren viele hämatologische Faktoren günstig beeinflußt sowie die Membranfluidität erhöht. Letzteres bewirkt eine erhöhte Aktivität von membrangebundenen Enzymen und Transportsystemen, was eine erhöhten Transport von Zell- bzw. Partikelbestandteilen (Ionen, Sauerstoff, Glukose, Lipide) zur Folge hat. Auf diese Weise tragen ungesättigte Fettsäuren zu einem aktiveren Stoffwechsel bei.

L-Carnitin und essentielle Fettsäuren haben damit in ihrer Kombination eine positive Wirkung auf den Organismus.

Es ist jedoch bekannt, daß ein hoher Gehalt an ungesättigten Fettsäuren Membranen anfällig gegen Lipidoxidation macht. Es wird daher weiter vorgeschlagen, daß membranschützende Vitamin E (etwa 200 mg/100 ml) sowie weitere Antioidantien wie Vitamin C (750 mg/100 ml), Beta-Carotin (50 mg/100 m) sowie Scavanger Magnesium (270 mg/100 ml), Mangan (3 mg/100 ml), Zink (0,7 mg/100 ml), Kupfer (0,03 mg/100 ml) und Selen (50 µg/100 ml) zuzugeben.

Dabei hat das Vitamin E offenbar einen direkten Einfluß auf die Energiegewinnung. Der Literatur ist zu entnehmen, daß in den Mitochondrien von Vitamin E-mangelernährten Versuchstieren die Zellatmung vermindert ist. Außerdem wurde gezeigt, daß Vitamin E-Mangel zu einer verminderten ATP-Synthese führt. Weiter konnte die Bedeutung von Vitamin E für die Enzyme der Atmungskette gezeigt werden, die labile SH-Gruppen enthalten und von Vitamin E vor Oxidation und damit von Inaktivierung geschützt werden. Somit spielt Vitamin E zumindest eine indirekte Rolle im Elektronentransport der Atmungskette. Weiter ist der protektive Effekt von Vitamin E gegen Peroxidation wesentlich. Ein "Oxidativer Stress", also eine verstärkte Radikalbildung tritt besonders bei Hypoxie auf, bei der das körpereigene Oxidationsabwehrsystem nicht mehr ausreicht.

Vitamin E soll weiter einen Schutz vor degenerativen Gelenkerkrankungen bieten, seine Zugabe ist daher auch unter diesem Aspekt vorteilhaft.

Es läßt sich somit feststellen, daß das hier vorgeschlagene Nahrungsergänzungsmittel aufgrund seiner neuartigen Zusammensetzung eine sinnvolle Nahrungsergänzung für Menschen darstellt, die körperlich stark beansprucht sind, beispielsweise für Sportler. Für Carnitin und Vitamin C liegen Daten vor, die ihren leistungssteigernden Effekt bei körperlicher Aktivität belegen oder zumindest sehr wahrscheinlich machen. Die weiter vorgeschlagene Zugabe einer ausreichenden Menge an Elektrolyten (Kalium, Magnesium, Calcium und Natrium) wirkt einem Elektrolytverlust durch vermehrte Schweißsekretion entgegen. Die weitere Zugabe von Antioxidantien wie Vitamin C (wasserlöslich) und Beta-Carotin (lipidlöslich) führen zu einem Wechselspiel zwischen den lipidlöslichen Vitaminen E und Beta-Carotin und dem wasserlöslichen Vitamin C, dem ein besonders starker Schutz vor Radikalen zugeschrieben wird, da das wasserlösliche Vitamin C das oxidierte, membrangebundene Vitamin E wieder regenerieren, also reduzieren kann.

## Patentansprüche

1. Nahrungsergänzungsmittel mit einem Fettsäure-Carrier, L-Carnitin, auf der Basis eines Frucht- oder Gemüsesaftes, angereichert mit den essentiellen Fettsäuren Omega 3- und Omega 6-, enthaltend Beta-Carotin und die Vitamine E und C, dadurch gekennzeichnet, daß
bei einer Zugabe des die Lipid-Oxidation von Zellmembranen vermeidendem lipidlöslichen, membranschützenden Vitamin E mit etwa 200 mg/100 ml, die weiteren Antioxidantien, lipidlösliches Beta-Carotin mit 50 mg/100 ml und wasserlösliches Vitamin C mit 750 mg/100 ml zur Reduzierung des Vitamin E zugegeben sind.

2. Zusammensetzung nach Anspruch 1, gekennzeichnet durch einen Zusatz von Vitamin E mit etwa 200 mg/100 ml, weiterer Antioxidantien wie Vitamin C mit 750 mg/100 ml und Beta-Carotin mit 50 mg/100 ml, sowie Scavanger Magnesium mit 270 mg/100 ml, Mangan mit 3 mg/100 ml, Zink mit 0,7 mg/100 ml, Kupfer mit 0,03 mg/100 ml und Selen mit 50 µg/100 ml.

## Claims

1. Food supplement with a fatty acid carrier, L-carnitine, based on a fruit or vegetable juice, enriched with beta-carotine containing the essential fatty acids omega 3 and omega 6 and vitamins E and C, characterized in that on adding lipid-soluble, membrane-protecting vitamin E preventing lipid oxidation of cell membranes in a quantity of approximately 200 mg/100 ml, the further antioxidants in the quantities 50 mg/100 ml of lipid-soluble beta-carotine and 750 mg/100 ml of water-soluble vitamin C are added for reducing the vitamin E.

2. Composition according to claim 1, characterized by an addition of vitamin E with approximately 200 mg/100 ml and, further antioxidants such as vitamin C with 750 mg/100 ml and beta-carotine with 50 mg/100 ml, as well as scavenger magnesium with 270 mg/100 ml, manganese with 3 mg/100 ml, zinc with 0.7 mg/100 ml, copper with 0.03 mg/100 ml and selenium with 50 µg/100 ml.

## Revendications

1. Complément alimentaire ayant un véhicule d'acide gras, la L-carnitine, à base d'un jus de fruits ou de légumes, enrichi avec les acides gras essentiels oméga-3 et oméga-6, contenant du bêta-carotène et les vitamines E et C, caractérisé par le fait que, avec l'addition de vitamine E protégeant les membranes, liposoluble, inhibant l'oxydation par les lipides des membranes cellulaires, à raison d'environ 200 mg/100 ml, sont ajoutés les autres antioxydants, le bêta-carotène liposoluble à raison de 50 mg/100 ml et la vitamine C hydrosoluble à raison de 750 mg/100 ml pour la réduction de la vitamine E.

2. Composition selon la revendication 1, caractérisée par une addition de vitamine E à raison d'environ 200 mg/100 ml, d'autres antioxydants comme la vitamine C à raison de 750 mg/100 ml et le bêta-carotène à raison de 50 mg/100 ml, ainsi que du magnésium adsorbant à raison de 270 mg/100 ml, du manganèse à raison de 3 mg/100 ml, du zinc à raison de 0,7 mg/100 ml, du cuivre à raison de 0,03 mg/100 ml et du sélénium à raison de 50 µg/100 ml.
